Europäisches Patentamt

European Patent Office

Office européen des brevets

(11) Numéro de publication: **0 022 569**
A1

(12) # DEMANDE DE BREVET EUROPEEN

(21) Numéro de dépôt: 80103995.9

(51) Int. Cl.³: **G 05 B 19/18,** B 23 B 29/034

(22) Date de dépôt: 11.07.80

(30) Priorité: 13.07.79 FR 7918232

(43) Date de publication de la demande: 21.01.81
Bulletin 81/3

(84) Etats contractants désignés: **AT BE CH DE GB IT LU NL SE**

(71) Demandeur: **REGIE NATIONALE DES USINES RENAULT, Boite postale 103 8-10 avenue Emile Zola, F-92109 Boulogne-Billancourt (FR)**

(72) Inventeur: **Pithery, Jean-René, Appartement 393 Tour Juillet Les Hautes Bergères, F-91440 Les Ulis-Bures-sur-Yvette (FR)**
Inventeur: **Sanguiol, Jean-Pierre, 13 Rue de la Roseraie, F-92360 Meudon-la-Forêt (FR)**
Inventeur: **Turlet, Michel, 21 Rue de Nemours, F-75011 Paris (FR)**

(74) Mandataire: **BUREAU D.A. CASALONGA, 8, Avenue Percier, F-75008 Paris (FR)**

(54) **Dispositif de commande d'un chariot déplaçable radialement sur un plateau rotatif, notamment d'un chariot porte-outil d'une machine-outil.**

(57) Dispositif de commande d'un chariot déplaçable radialement sur un plateau rotatif, notamment d'un chariot porte-outil d'une machine-outil.

Le rotor du moteur (19) de commande de déplacement du chariot (9) sur le plateau (8) est fixé directement à l'arbre de commande (17) coaxial à la broche (5) portant le plateau (8). L'asservissement en vitesse et en position entre l'arbre (17) et la broche (5) est assuré par des moyens électriques.

Application: notamment aux aléseuses-dresseuses à commande numérique.

EP 0 022 569 A1

Dispositif de commande d'un chariot déplaçable radialement sur un plateau rotatif, notamment d'un chariot porte-outil d'une machine-outil.

La présente invention due à la collaboration de Messieurs Jean-René PIHERY, Jean-Pierre SANGUIOL et Michel TURLET se rapporte à la commande d'un chariot déplaçable radialement sur un plateau rotatif solidaire d'une broche entraînée en rotation par un moteur, notamment sur une machine-outil telle qu'une aléseuse-dresseuse à commande numérique.

On connaît un aléseuse-dresseuse à commande numérique de ce type sur laquelle le plateau portant le chariot porte-outil déplaçable radialement est solidaire d'une extrémité d'une broche dont l'extrémité opposée porte une roue dentée en prise avec le pignon de l'arbre d'un moteur d'entraînement. Le chariot porte-outil est déplaçable radialement sur ledit plateau sous l'action d'un moteur de commande situé à l'extrémité de la broche opposée au plateau et entraînant, par l'intermédiaire d'un train épicycloïdal, un arbre coaxial à la broche, agissant sur ledit chariot par l'intermédiaire d'un couple de roues coniques et d'un système à vis-écrou. La broche et l'arbre de commande du chariot sont couplés par ledit train épicycloïdal par le fait que l'arbre de commande porte, à son extrémité opposée au plateau, un ou plusieurs satellites se trouvant en prise avec le pignon de sortie (planétaire) du moteur de commande et avec une couronne solidaire de la roue dentée de la broche. En alésage, on bloque le moteur de commande du chariot, de sorte que l'arbre de commande tourne à la même vitesse que la broche et que le chariot ne se déplace pas par rapport au plateau. En dressage, on entraîne le moteur de commande du chariot, de sorte que la broche et l'arbre de commande tournent à des vitesses différentes et que le chariot se déplace par rapport au plateau.

Le train épicycloïdal utilisé sur cette aléseuse-dresseuse connue est non seulement coûteux, mais présente également des jeux, des inerties et des frottements importants. Cela entraîne des vibrations et, en fin de compte, un manque

de précision qui est en contradiction avec la précision élevée que permet la commande numérique utilisée sur de telles machines.

Il serait possible de remédier aux inconvénients relatifs au manque de précision de cette aléseuse-dresseuse connue en montant l'ensemble du dispositif de commande du chariot sur le plateau rotatif. Cependant, le moteur de commande devrait alors être sous-dimensionné et subirait, tout comme le codeur nécessaire pour le positionnement correct du chariot, les effets centrifuges dus à la rotation du plateau. De plus, la transmission des informations entre la commande de chariot montée sur le plateau et la commande numérique de la machine devrait alors se faire, soit par un émetteur-récepteur radio comportant un grand nombre de canaux, soit par un collecteur comportant un grand nombre de pistes. Cette commande "embarquée" sur le plateau serait donc d'un prix de revient très élevé et d'une fiabilité réduite. Le montage et l'entretien de la commande de chariot poseraient également des problèmes dus au manque de place et à la mauvaise accessibilité sur le plateau.

La présente invention a pour objet une commande de chariot déplaçable radialement sur un plateau rotatif, notamment d'un chariot porte-outil sur le plateau d'une machine-outil telle qu'une aléseuse-dresseuse, remédiant aux inconvénients que présentent les commandes connues en ce qui concerne le prix de revient ainsi que le manque de précision et de fiabilité.

Dans le dispositif de commande conforme à l'invention d'un chariot déplaçable radialement sur un plateau rotatif solidaire d'une extrémité d'une broche entraînée en rotation par un moteur, le déplacement du chariot est commandé par un moteur situé à l'extrémité de la broche opposée au plateau et agissant sur le chariot par un arbre coaxial à la broche, un couple de roues coniques et un système à vis-écrou. Le rotor du moteur de commande du chariot est fixé directement audit arbre à l'extrémité de la broche opposée au plateau et le moteur de commande du chariot est asservi par des moyens électriques en vitesse et en position au moteur d'entraînement de la broche.

Le moteur de commande du chariot n'est donc pas accouplé mécaniquement au moteur d'entraînement de la broche et l'asservissement en vitesse et en position des deux moteurs supprime tous les jeux, les inerties, les frottements et les vibrations des trains épicycloïdaux utilisés sur les machines connues. La précision obtenue par cet asservissement électrique permet de bénéficier pleinement de la précision que procure la commande numérique qui s'impose de plus en plus sur des machine-outils.

Suivant un premier mode de réalisation de l'invention, le stator du moteur de commande du chariot est solidaire de la broche et les moyens d'asservissement comprennent des moyens contrôlant la vitesse de rotation et la position angulaire du stator par rapport au rotor du moteur de commande. Le stator du moteur de commande tourne donc avec la broche à la vitesse de cette dernière définie par son moteur d'entraînement. En alésage, il suffit de bloquer le rotor du moteur de commande par rapport à son stator. En dressage, on entraîne le rotor du moteur de commande par rapport à son stator pour faire tourner l'arbre de commande à une vitesse différente de celle de la broche.

Dans le cas où le moteur de commande est un moteur à courant continu ou un moteur hydraulique, les moyens d'asservissement comprennent un codeur rotatif sur le moteur ou un codeur linéaire entre le chariot et le plateau, ainsi qu'un compteur pour les impulsions du codeur. Cependant, du fait qu'un moteur à courant continu ne peut pas être bloqué électriquement en fournissant un fort couple, il est avantageux d'utiliser, pour le moteur de commande, un moteur électrique pas à pas. Dans ce cas, l'asservissement est en plus simplifié du fait qu'il suffit de compter les impulsions électriques correspondant au nombre de pas du moteur pour connaître à tout instant la position angulaire du rotor du moteur par rapport à son stator, donc la position du chariot porte-outil.

Suivant un autre mode de réalisation de l'invention, le stator du moteur de commande du chariot est solidaire du corps de support fixe de la broche, et les moyens d'asservissement comprennent des moyens contrôlant la vitesse de rotation et la position angulaire des rotors du moteur d'entraînement de la broche et du moteur de commande du chariot par rapport à leur stator. Dans ce cas, les moyens d'asservissement comprennent avantageusement, sur chaque moteur, un dynamo tachymétrique et un codeur angulaire, les deux dynamos tachymétriques et les deux codeurs angulaires travaillant en différentiel. Il est cependant possible également d'utiliser dans ce cas, comme moyens d'asservissement, une dynamo tachymétrique sur chacun des deux moteurs et un codeur linéaire entre le chariot et le plateau.

En se référant au dessin annexé, on va décrire ci-après plus en détail plusieurs modes de réalisation illustratifs et non limitatifs de l'objet de l'invention; sur le dessin :

la fig. 1 représente schématiquement, en élévation frontale, un plateau rotatif d'aléseuse-dresseuse, avec un chariot porte-outil déplaçable radialement;

la fig. 2 est une vue en élévation latérale partiellement en coupe axiale, d'une aléseuse-dresseuse avec commande du chariot porte-outil par un moteur dont le stator est solidaire de la broche;

la fig. 3 représente la même aléseuse-dresseuse que la fig. 2, avec commande du chariot porte-outil par un moteur à stator fixe;

les fig. 4 et 5 illustrent deux schémas d'une commande d'aléseuse-dresseuse selon la fig. 2;

les fig. 6 et 7 illustrent deux schémas d'une commande d'aléseuse-dresseuse selon la fig. 3.

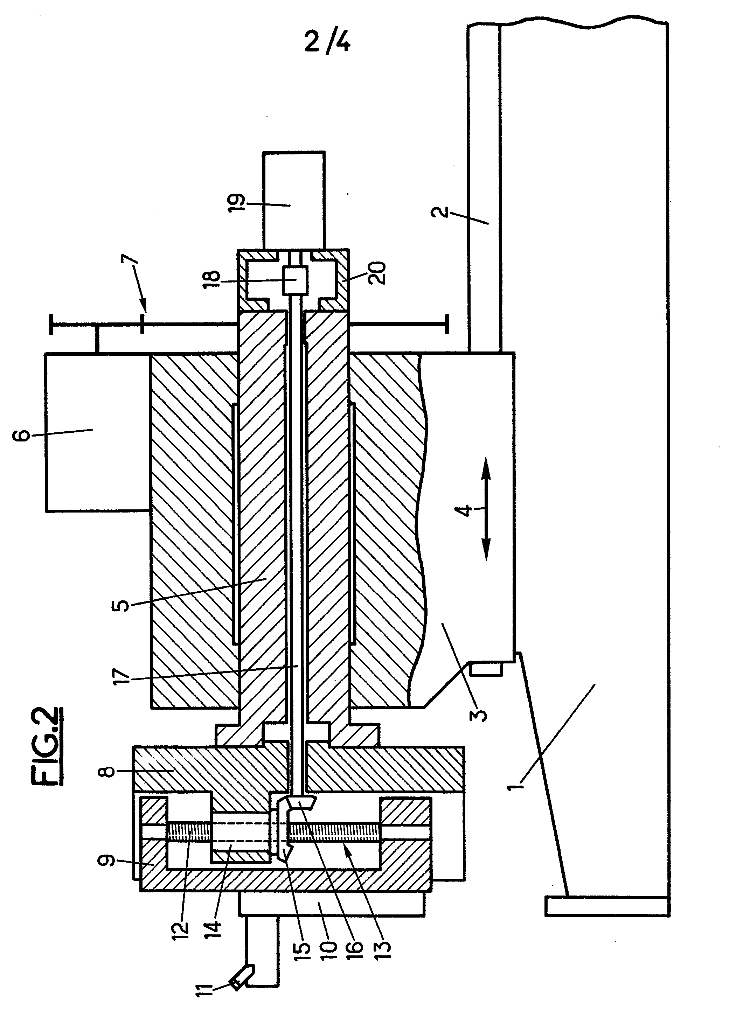

L'aléseuse-dresseuse illustrée par la fig. 2 comprend un bâti fixe 1 portant des glissières 2 sur lesquelles un corps de support de broche 3 est déplaçable dans les deux sens de la flèche double 4 sous l'action d'une commande non représentée notamment d'une commande numérique. Une broche 5 montée en rotation dans le corps de support 3 est entraînée, par l'intermédiaire d'un réducteur 7, par un moteur 6 dont le stator est fixé sur le corps de support 3. A son extrémité de gauche sur la fig. 2, la broche 5 porte un plateau 8 sur lequel un chariot 9 est monté mobile en translation radiale. Sur le chariot 9 est monté un porte-outil 10 portant un outil référencé 11.

Le déplacement radial du chariot 9 sur le plateau 8 est commandé par une vis 12 solidaire d'un arbre 13 monté en rotation mais immobilisé axialement sur le chariot 9. La vis 12 se trouve en prise avec un écrou 14 monté en rotation mais immobilisé axialement sur le plateau 8. Un pignon conique 15 solidaire de l'écrou 14 engrène avec un pignon conique 16 solidaire de l'extrémité de gauche d'un arbre 17 traversant en position coaxiale le plateau 8 et la broche 5.

L'extrémité de droite sur la fig. 2 de l'arbre 17 est prolongée au-delà de l'extrémité correspondante de la broche 5 et est reliée par un accouplement 18 au rotor d'un moteur de commande 19. Le stator du rotor 19 est fixé à la broche 5 par une pièce intermédiaire 20. Le stator du moteur 19 tourne donc avec la broche 5.

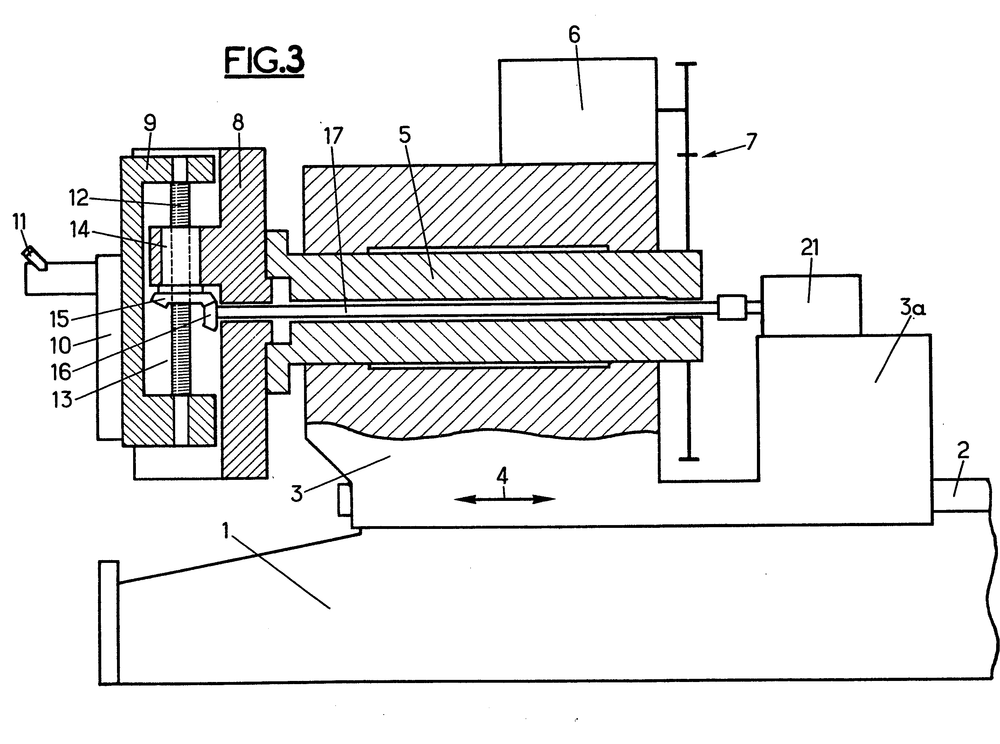

L'aléseuse-dresseuse illustrée par la fig. 3 présente les mêmes caractéristiques de structure mécanique que celles de la fig. 2. Cependant, le moteur de commande du déplacement du chariot 9, dont le rotor est accouplé avec l'arbre de commande 17, est constitué par un moteur 21 dont le stator est fixé sur une partie 3a du corps de support 3 de la broche 5.

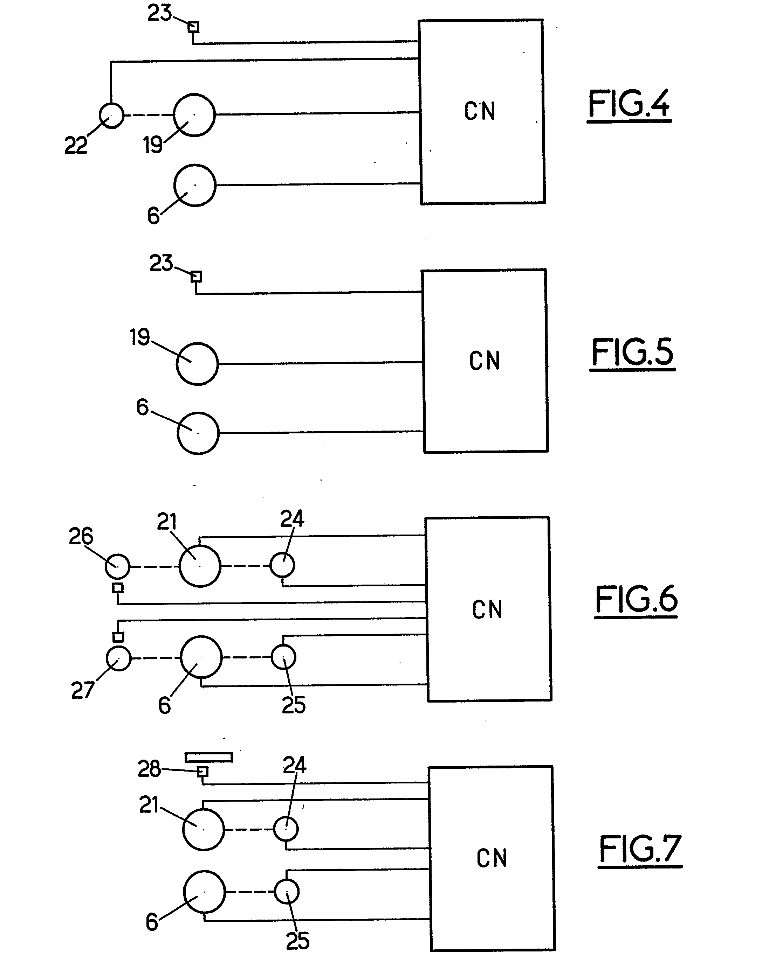

Les fig. 4 à 7 représentent plusieurs schémas pour la commande du chariot porte-outil sous l'action de la commande numérique de l'aléseuse-dresseuse.

Sur la fig. 4 qui illustre un schéma pour une commande de chariot par un moteur 19 dont le stator est solidaire de la broche, selon la fig. 2, le moteur 19 peut être un moteur à courant continu ou, par exemple, un moteur hydraulique. Le moteur 19 tout comme le moteur 6 d'entraînement de la broche sont reliés à la commande numérique C.N. de l'aléseuse-dresseuse. Un codeur angulaire (resolver) 22 relié également à la commande numérique mesure la rotation du rotor du moteur 19 par rapport à son stator. Un capteur 23 monté sur le plateau et actionné par le chariot porte-outil détermine le calage d'origine du chariot par rapport au plateau, nécessaire pour permettre le positionnement par la commande numérique.

Sur le schéma de la fig. 5, qui se rapporte également au mode de réalisation suivant la fig. 2, le moteur 19 dont le stator est solidaire de la broche est un moteur électrique pas à pas. Dans ce cas, pour connaître la position du rotor du moteur 19 par rapport à son stator, à partir du calage d'origine défini par le capteur 23, il suffit de compter les impulsions électriques correspondant au nombre de pas effectués dans un sens de rotation ou dans l'autre par le rotor du moteur 19 par rapport à son stator, à l'aide d'un compteur non représenté, incorporé à la commande numérique C.N.

Le schéma selon la fig. 6 se rapporte à une commande de déplacement de chariot à l'aide d'un moteur 21 à stator fixe selon la fig. 3. Pour obtenir un asservissement précis en vitesse et en position des deux moteurs 21 et 6, chacun des deux moteurs comporte une dynamo tachymétrique 24, 25 et un capteur angulaire (resolver) 26, 27. Les deux dynamos tachymétriques 24, 25 et les deux capteurs angulaires 26, 27 travaillent en différentiels, assurant ainsi les premiers l'asservissement en vitesse et les seconds l'asservissement en position des deux moteurs.

Sur le schéma de la fig. 7, qui se rapporte également à une commande de déplacement de chariot par un moteur 21 à stator fixe, on retrouve, comme sur la fig. 6, les deux dynamos tachymétriques 24, 25 travaillant en différentiel. Cependant, les deux capteurs angulaires utilisés dans le schéma de la fig. 6 sont ici remplacés par un capteur de position linéaire 28 monté entre le plateau et le chariot porte-outil.

On va décrire ci-après le mode de fonctionnement de la commande conforme à l'invention de déplacement de chariot porte-outil sur le plateau d'une aléseuse-dresseuse.

Pendant l'alésage, il s'agit de maintenir l'outil 11, tournant avec le plateau 8 dans sa position radiale par rapport au plateau pendant que ce dernier subit une avance dans la direction de la flèche 4. Il faut donc que la vitesse de rotation de l'arbre de commande 17 soit rigoureusement égale à la vitesse de rotation de la broche 5.

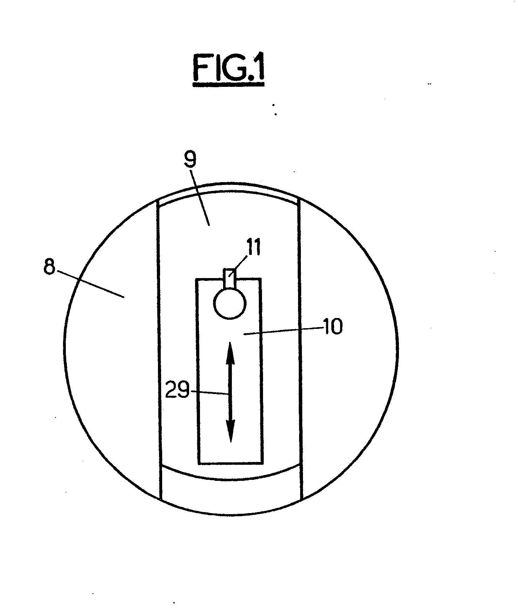

En dressage, il s'agit de faire décrire à l'outil 11, entraîné en rotation par le plateau 8, un mouvement en spirale, c'est-à-dire de déplacer l'outil 11 lentement suivant l'axe de la flèche 29 sur la fig. 1 pendant la rotation du plateau 8. Cette avance de l'outil 11 est obtenue par l'entraînement de l'arbre de commande 17 à une vitesse de rotation légèrement différente de la vitesse de rotation de la broche 5.

Dans le mode de réalisation suivant la fig. 2, le stator du moteur 19 est solidaire de la broche 5.

En alésage, le rotor du moteur 19 est bloqué par rapport à son stator, c'est-à-dire que l'arbre de commande 17 et la broche 5 tournent rigoureusement à la même vitesse.

En dressage, le moteur 19 est alimenté par la commande numérique de manière que son rotor tourne lentement par rapport à son stator. Cela produit une légère différence entre les vitesses de rotation de la broche 5 et de l'arbre de commande 17, de sorte que le chariot 9 se déplace lentement suivant l'axe de la flèche double 29 et déplace en conséquence l'outil 11. Le calage d'origine de la position du chariot 10 sur le plateau 8 est obtenu par un signal émis par le capteur 23. A partir de cette position, il suffit de contrôler la vitesse et la position angulaire du stator du moteur 19 par rapport à son rotor pour connaître à tout instant la position du chariot 10.

Dans le cas où, comme représenté sur la fig. 4, le moteur 19 est un moteur à courant continu ou un moteur hydraulique, le codeur angulaire (resolver) 22 mesure la rotation du rotor du moteur 19 par rapport à son stator, pour assurer ainsi, en combinaison avec la commande numérique, un asservissement rigoureux en vitesse et en position.

De préférence, le moteur 19 est un moteur électrique pas à pas. En effet, un tel moteur peut, contrairement à un moteur à courant continu, être bloqué électriquement en fournissant un couple important. Lors de l'utilisation d'un tel moteur pas à pas, il est possible, comme représenté sur la fig. 5, de supprimer le codeur angulaire 22 utilisé sur la fig. 4. Pour assurer l'asservissement en position et en vitesse, il suffit de compter les impulsions électriques correspondant au nombre de pas du moteur 19 dans un sens de rotation ou dans l'autre.

Dans les deux variantes suivant les fig. 4 et 5, il est possible de monter entre le plateau 8 et le chariot 9 un capteur de position linéaire, non représenté, dont les informations peuvent être transmises à la commande numérique par radio ou par un collecteur électrique.

Le mode de réalisation suivant la fig. 3, dans lequel le stator du moteur 21 de commande de déplacement du chariot est fixe, nécessite en alésage et en dressage un asservissement précis en vitesse et en position des deux moteurs 6 et 21, assuré selon la fig. 6 par deux dynamos tachymétriques 24, 25 et deux capteurs angulaires 26, 27 travaillant en différentiel et suivant la fig. 7 par deux dynamos tachymétriques 24, 25 travaillant en différentiel et par un capteur de position linéaire 28 monté entre le plateau et le chariot porte-outil.

En alésage, le moteur 21 est entraîné à une vitesse égale à la vitesse de la broche 5, la synchronisation de ces deux vitesses étant assurée par les deux dynamos tachymétriques 24 et 25.

En dressage, le moteur 21 est entraîné à une vitesse légèrement différente de la vitesse de la broche 5, avec asservissement précis en vitesse par les deux dynamos tachymétriques 24, 25 et en position par les deux capteurs angulaires 26, 27 (fig. 6) ou par le capteur de position linéaire 28 prévu suivant la fig. 7 entre le plateau 8 et le chariot porte-outil 9. Les informations de ce capteur 28 peuvent être transmises à la commande numérique par radio ou par un collecteur électrique.

9

0022569

Il va de soi que de nombreuses modifications et variantes peuvent être apportées aux modes de réalisation tels que décrits ci-dessus et représentés sur le dessin annexé. En particulier, d'autres moyens équivalents, à la portée de l'homme de l'art, peuvent être utilisés en vue de l'asservissement en vitesse et en position de l'arbre de commande 17 et de la broche 5. L'invention n'est pas non plus limitée à la commande d'un chariot porte-outil sur une aléseuse-dresseuse et peut être appliquée à toute commande de déplacement d'un chariot sur un plateau rotatif.

0022569

## REVENDICATIONS

1. Dispositif de commande d'un chariot déplaçable radialement sur un plateau rotatif, en particulier d'un chariot porte-outil sur un plateau d'une machine-outil telle qu'une alésage-dresseuse, ledit plateau étant solidaire d'une extrémité d'une broche entraînée en rotation par un moteur et ledit chariot étant déplaçable radialement sur ledit plateau sous l'action d'un moteur de commande situé à l'extrémité de la broche opposée au plateau et agissant sur ledit chariot par un arbre coaxial à ladite broche et un couple de roues coniques et un système à vis-écrou, caractérisé par le fait que le rotor du moteur de commande du chariot est fixé directement audit arbre de commande à l'extrémité de la broche opposée au plateau et que le moteur de commande du chariot est asservi par des moyens électriques en vitesse et en position au moteur d'entraînement de la broche.

2. Dispositif suivant la revendication 1, caractérisé par le fait que le stator du moteur de commande du chariot est solidaire de la broche et que son rotor est asservi en vitesse et en position à son stator.

3. Dispositif suivant la revendication 2, caractérisé par le fait que le moteur de commande du chariot est un moteur électrique pas à pas et que lesdits moyens d'asservissement comprennent un compteur pour les impulsions de pas envoyées au moteur de commande.

4. Dispositif suivant la revendication 2, caractérisé par le fait que le moteur de commande du chariot est un moteur électrique à courant continu ou un moteur hydraulique et que lesdits moyens d'asservissement comprennent un codeur angulaire mesurant la rotation du rotor par rapport au stator du moteur de commande du chariot.

5. Dispositif suivant la revendication 3 ou 4, caractérisé par le fait que lesdits moyens d'asservissement comprennent, en outre, un capteur de position linéaire entre le plateau et le chariot.

11                    0022569

6. Dispositif suivant la revendication 1, caractérisé par le fait que le stator du moteur de commande de la broche est solidaire du corps de support de la broche et que le rotor du moteur de commande du chariot est asservi en vitesse et en position au rotor du moteur d'entraînement de la broche.

7. Dispositif suivant la revendication 6, caractérisé par le fait que lesdits moyens d'asservissement comprennent deux dynamos tachymétriques et deux codeurs angulaires travaillant en différentiel pour mesurer et contrôler les vitesses et les positions angulaires des rotors des deux moteurs de commande de chariot et d'entraînement de la broche.

8. Dispositif suivant la revendication 7, caractérisé par le fait que lesdits moyens d'asservissement comprennent deux dynamos tachymétriques travaillant en différentiel pour mesurer et contrôler les vitesses de rotation des rotors des deux moteurs de commande de chariot et d'entraînement de la broche et un capteur de position linéaire entre le chariot et le plateau.

9. Dispositif de commande suivant l'une quelconque des revendications précédentes, sur une machine-outil à commande numérique, caractérisé par le fait que lesdits moyens d'asservissement sont contrôlés par la commande numérique de la machine-outil.

## FIG.1

FIG.2

2/4

0022569

FIG.3

4/4

0022569

FIG.4

FIG.5

FIG.6

FIG.7

# RAPPORT DE RECHERCHE EUROPEENNE

Office européen
des brevets

0022569

Numéro de la demande

EP 80 10 3995

| Catégorie | Citation du document avec indication, en cas de besoin, des parties pertinentes | Revendication concernée |
|---|---|---|
| X | FR - A - 2 374 120 (KEARNEY & TRECKER CORP.)<br><br>* Page 1, ligne 22 - page 2, ligne 19; page 3, ligne 21 - page 12, ligne 31; page 15, lignes 3,4; figures 1-9 * | 1,2,4,7 |
| X | GB - A - 926 536 (SOCIETE GENEVOISE D'INSTRUMENTS DE PHYSIQUE)<br><br>* Page 1, ligne 36 - page 2, ligne 75; page 3, lignes 3-11; figures 1-4 * | 1,2,4,6,9 |
| X | DE - A - 2 455 402 (STAVELEY MACHINE TOOLS LTD.)<br><br>* Page 3, ligne 22 - page 6, ligne 17; page 8, ligne 1 - page 9, fin; figures 1-5 * | 1-3 |
| | FR - A - 2 087 055 (P.I.V.)<br>* Page 5, lignes 1-34; figures * | 7,8 |

## DOCUMENTS CONSIDERES COMME PERTINENTS

### CLASSEMENT DE LA DEMANDE (Int. Cl. 3)

G 05 B 19/18
B 23 B 29/034

### DOMAINES TECHNIQUES RECHERCHES (Int. Cl. 3)

G 05 B 19/18
B 23 Q 1/08
          5/10
B 23 B 29/034
G 05 D 13/62

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 20-10-1980 | CORNILLIE |

OEB Form 1503.1 06.78